(19) **Europäisches Patentamt / European Patent Office / Office européen des brevets**

(11) **EP 1 544 653 B1**

(12) # EUROPÄISCHE PATENTSCHRIFT

(45) Veröffentlichungstag und Bekanntmachung des Hinweises auf die Patenterteilung:
**05.08.2009 Patentblatt 2009/32**

(51) Int Cl.:
*G02B 15/173* *(2006.01)*      *G02B 21/22* *(2006.01)*

(21) Anmeldenummer: **04029501.6**

(22) Anmeldetag: **14.12.2004**

(54) **Mikroskop mit einem afokalen Zoomsystem**

Microscope with an afocal zoom system

Microscope avec un système de zoom afocal

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.12.2003 DE 10359733**

(43) Veröffentlichungstag der Anmeldung:
**22.06.2005 Patentblatt 2005/25**

(73) Patentinhaber: **Carl Zeiss MicroImaging GmbH 07745 Jena (DE)**

(72) Erfinder:
- **Winterot, Johannes 07745 Jena (DE)**
- **Hüttel, Peter 07745 Jena (DE)**

(74) Vertreter: **Scholze, Humbert Carl Zeiss Jena GmbH Konzernfunktion Recht und Patente Patentabteilung Carl-Zeiss-Promenade 10 07745 Jena (DE)**

(56) Entgegenhaltungen:
DE-A1- 3 904 190       US-A- 4 666 258
US-A- 4 705 343       US-A- 4 802 717
US-A- 5 991 090       US-A1- 2003 210 470

- **PATENT ABSTRACTS OF JAPAN Bd. 015, Nr. 380 (P-1256), 25. September 1991 (1991-09-25) -& JP 03 150517 A (CANON INC), 26. Juni 1991 (1991-06-26)**
- **PATENT ABSTRACTS OF JAPAN Bd. 017, Nr. 481 (P-1604), 31. August 1993 (1993-08-31) -& JP 05 119260 A (CANON INC), 18. Mai 1993 (1993-05-18)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Stereomikroskop mit einem afokalen Zoomsystem, umfassend vier oder fünf optische Baugruppen, von denen zwei Baugruppen zwecks Änderung der Vergrößerung relativ zueinander und zu den übrigen Baugruppen beweglich sind.

Afokale Zoomsysteme sind an sich bekannt. Sie werden zum Zwecke der Veränderung der Vergrößerung in herkömmlichen Mikroskopen als einkanalige Systeme oder in Stereo- und Operationsmikroskopen in zweikanaliger Ausführung nach dem Fernrohrtyp verwendet. Beim Fernrohrtyp handelt es sich, im Gegensatz zu Stereomikroskopen nach dem Greenoughtyp, bei denen zwei Objektive und zwei getrennte, unter einem Winkel von 12° bis 14° gegeneinander geneigte Mikroskopstrahlengänge verwendet werden, um eine Ausführungsform, die mit einem, beiden Strahlengängen gemeinsamen Hauptobjektiv ausgestattet ist, in dessen dingseitiger Brennebene das Objekt liegt. Dabei werden aus dem vom Objektiv angebotenen parallelen Lichtbündel zwei auch zueinander parallele Teilbündel so ausgeblendet, dass deren vor dem Objektiv konvergente Achsen den erforderlichen Winkel von 12° bis 14° bilden und zwei unter diesem Winkel gesehene reelle Zwischenbilder erzeugen.

Afokale Zoomsysteme sind aufgrund ihrer eingrenzenden baulichen Randbedingungen von Foto-, Video- und Fernrohrsystemen verschieden und daher einem gesonderten technischen Sachgebiet zuzuordnen. Insbesondere die nur begrenzt zulässige Größe der Linsendurchmesser bei zweikanaliger Ausführung erlaubt es nicht, bereits vorhandene Zoomsysteme aus den vorgenannten Sachgebieten bzw. Erzeugnisgruppen in die Mikroskopie zu übernehmen.

In Mikroskopen werden häufig afokale Zoomsysteme mit vier optischen Baugruppen und einem Zoomfaktor größer 8 verwendet. Solche Systeme sind beispielsweise beschrieben in DE 202 07 780 U1; in US 6,320,702 B1; in US 6,157,495 und in US 6,335,833 B1.

Vom Objekt aus betrachtet sind die dort angegebenen Systeme gleichermaßen aus einer ortsfesten ersten Gruppe mit positiver Brechkraft, einer beweglichen zweiten Gruppe mit negativer Brechkraft, einer beweglichen dritten Gruppe mit positiver Brechkraft und einer ortsfesten vierten Gruppe mit negativer Brechkraft aufgebaut. Zwecks Änderung der Vergrößerung werden die beiden mittleren Gruppen in gegensinnigen Richtungen zueinander bewegt, wobei die Vergrößerung abnimmt, wenn der Abstand zwischen den beiden beweglichen Gruppen vergrößert wird.

Aus US 2003/0210470 wird ebenfalls ein afokales Zoomsystem bekannt, welches aus vier Linsengruppen besteht, von denen die beiden äußeren Linsengruppen ortsfest angeordnet sind, während sich die beiden inneren Linsengruppen zum Zwecke der Vergrößerung entgegengesetzt gerichtet bewegen.

Auf diesen Grundaufbau und diese Bewegungscharakteristik der beiden beweglichen Baugruppen beziehen sich alle oben als Stand der Technik genannten Veröffentlichungen.

Dabei nehmen die Bewegungsbereiche der beweglichen Baugruppen weitestgehend den für das gesamte Zoomsystem zur Verfügung stehenden Bauraum in Anspruch. So beträgt z.B. der Bewegungsbereich bei dem Zoomsystem nach US 6,335,833 B1 etwa 102 mm, während die Baulänge des Systems und damit das Einbaumaß ca. 150 mm beträgt.

Dies hat den Nachteil, dass eine raumsparende Ausbildung der Bauelemente, die zur Führung der beweglichen optischen Baugruppen erforderlich sind, nicht möglich ist und deshalb die Reduzierung der Baugröße von Mikroskopen behindert wird. Das gilt insbesondere für Mikroskope, bei denen das Zoomsystem und der zugeordnete Antrieb ein vorgegebenes Maß nicht überschreiten dürfen.

In DE 39 04 190 A1 wird ein ähnliches System mit einer ortsfesten ersten Gruppe mit positiver Brechkraft, einer beweglichen zweiten Gruppe mit negativer Brechkraft, einer beweglichen dritten Gruppe mit negativer Brechkraft und einer ortsfesten vierten Gruppe mit positiver Brechkraft beschrieben. Hier werden zur Änderung der Vergrößerung werden die beiden mittleren Gruppen gleichgerichtet bewegt. Ein derartiges System hat den Nachteil, dass der Zoombereich relativ klein ist.

Ferner ist aus US 4,802,717 ein afokales Infrarot-Teleskop bekannt, welches eine ortsfeste erste Gruppe mit positiver Brechkraft, eine bewegliche zweite Gruppe mit negativer Brechkraft, eine ortsfeste dritte Gruppe mit positiver Brechkraft und eine bewegliche vierte Gruppe mit negativer Brechkraft aufweist, wobei sich die beweglichen Gruppen bei der Vergrößerungsänderung teilweise gleichgerichtet und teilweise entgegengesetzt gerichtet bewegen. Hierbei werden dynamische Blenden verwendet.

Ausgehend von den Lösungen des Standes der Technik liegt der Erfindung die Aufgabe zugrunde, ein Stereomikroskop mit einem afokalen Zoomsystem zu entwickeln, das auch im Hinblick auf die Kombination mit einem geeigneten Antriebsmechanismus eine verhältnismäßig geringe Baugröße ermöglicht.
Diese Aufgabe wird gelöst mit einem Stereomikroskop der eingangs beschriebenen Art, welches die Merkmale des Anspruchs 1 aufweist. Ausgestaltungen des erfindungsgemäßen Stereomikroskops sind in den zugehörigen Unteransprüchen angegeben.

Mit dem erfindungsgemäßen Stereomikroskop ist jede einstellbare Vergrößerung durch eine gleichgerichtete Verschiebebewegung der beiden beweglichen optischen Baugruppen erzielbar.
Damit lässt sich in Verbindung mit einer Antriebseinrichtung ein geringerer Bauraum verwirklichen, als dies bisher im Stand der Technik möglich war. Üblicherweise erfolgt nämlich die räumliche Orientierung der bewegten optischen Baugruppen auf zwei Stangen. Dabei ist ein Träger mit einer Aufnahme für eine optische Baugruppe so ausgelegt, dass er eine der Stangen als Hülse umschließt und die zweite Stange als Verdrehsicherung antastet. Das bedingt, dass die freie Länge der Stangen größer ist als die Bewegungslänge der optischen Baugruppe und die Länge der Hülse.

Bei gegenläufiger Bewegung der Träger addieren sich die Führungslängen und sind dadurch größer als der für die optischen Baugruppen erforderliche Raum. Dies verhindert eine Verringerung der Baugröße von Mikroskopen. Dagegen ist es bei gleichsinniger Bewegung der beiden Träger möglich, diese auf zwei parallelen Stangen zu führen, ohne dass diese Stangen länger sein müssen als der optische Bauraum.

In einer ersten Ausgestaltung umfasst das erfindungsgemäße Stereomikroskop vier optische Baugruppen, von denen objektseitig bzw. bei dem Unendlichraum zum Objektiv beginnend eine erste Baugruppe ortsfest mit positiver Brechkraft, eine zweite Baugruppe beweglich mit negativer Brechkraft, eine dritte Baugruppe ortsfest mit positiver Brechkraft und eine vierte Baugruppe beweglich mit negativer Brechkraft ausgeführt sind.

Vorteilhaft ist vorgesehen, dass die beiden beweglichen Baugruppen mit unterschiedlicher Verschiebegeschwindigkeit beweglich sind, wobei die geringstmögliche Vergrößerung dann eingestellt ist, wenn beide beweglichen Baugruppen am weitesten in Richtung zur ersten Baugruppe verschoben sind.

In einer zweiten Ausgestaltung umfasst das erfindungsgemäße Stereomikroskop fünf optische Baugruppen, von denen objektseitig beginnend eine erste Baugruppe ortsfest mit positiver Brechkraft, eine zweite Baugruppe beweglich mit negativer Brechkraft, eine dritte Baugruppe ortsfest mit positiver Brechkraft, eine vierte Baugruppe beweglich mit negativer Brechkraft sowie eine fünfte Baugruppe ortsfest mit positiver Brechkraft ausgeführt sind.

Auch hierbei ist vorgesehen, dass die beiden beweglichen Baugruppen mit unterschiedlicher Verschiebegeschwindigkeit beweglich sind, wobei die Vergrößerung wiederum dann am geringsten ist, wenn beide beweglichen Baugruppen am weitesten in Richtung zur ersten Baugruppe verschoben sind.

Es sei darauf hingewiesen, dass das Zoomsystem prinzipiell auch mit umgekehrter Reihenfolge der optischen Baugruppen in den Mikroskopstrahlengang eingeordnet werden kann, wobei dann bildseitig bzw. beim Unendlichraum zur Tubuslinse beginnend zunächst die erste Baugruppe angeordnet ist.

Optional können die beweglichen Baugruppen bei jedem der beschriebenen erfindungsgemäßen Ausgestaltungsvarianten mit Antriebseinrichtungen verbunden sein, die

- in Form von Trommelkurven,
- als Ritzel und Zahnstange mit Zwangssteuerung durch eine Kurvenscheibe,
- als Zwangssteuerung durch mehrere Kurvenscheiben,
- als motorischer Direktantrieb, bevorzugt in Form von Schrittmotoren, oder
- als Hebelsystem mit Differenzbewegung und Zwangssteuerung durch eine Kurvenscheibe ausgeführt sind.

Das erfindungsgemäße Stereomikroskop mit afokalen Zoomsystem soll nachfolgend anhand von mehreren Beispielen präzisiert werden. In den zugehörigen Zeichnungen zeigen

Fig.1 eine erste Ausgestaltungsvariante mit vier optischen Baugruppen und einer Baulänge von 130 mm,
Fig.2 eine Darstellung der Bewegungscharakteristik des Zoomsystems aus Fig.1,
Fig.3 eine zweite Ausgestaltungsvariante mit vier optischen Baugruppen und einer Baulänge von 160 mm,
Fig.4 eine Darstellung der Bewegungscharakteristik des Zoomsystems aus Fig.3,
Fig.5 eine dritte Ausgestaltungsvariante mit vier optischen Baugruppen und einer Baulänge von 197 mm,
Fig.6 eine Darstellung der Bewegungscharakteristik des Zoomsystems aus Fig.5,
Fig.7 eine erste Ausgestaltungsvariante mit fünf Baugruppen und einer Baulänge von 130 mm,
Fig.8 eine Darstellung der Bewegungscharakteristik des Zoomsystems aus Fig.7,
Fig.9 eine zweite Ausgestaltungsvariante mit fünf optischen Baugruppen und einer Baulänge von 140 mm,
Fig.10 eine Darstellung der Bewegungscharakteristik des Zoomsystems aus Fig.9,
Fig.11 eine dritte Ausgestaltungsvariante mit fünf optischen Baugruppen und einer Baulänge von 160 mm,
Fig.12 eine Darstellung der Bewegungscharakteristik des Zoomsystems aus Fig.11,
Fig.13 eine vierte Ausgestaltungsvariante mit fünf optischen Baugruppen und einer Baulänge von 180 mm,
Fig.14 eine Darstellung der Bewegungscharakteristik des Zoomsystems aus Fig.13.

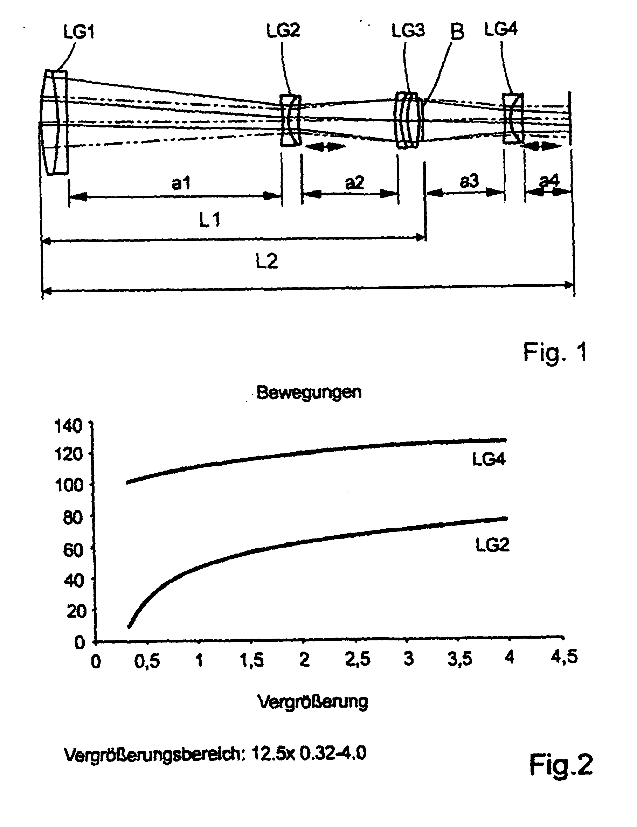

Das in Fig.1 dargestellte erfindungsgemäße Stereomikroskop mit afokalen Zoomsystem umfasst für einen Zoombereich von > 12 bis 20 bei einer Baulänge von 130 mm vier optische Baugruppen und hat folgende Systemdaten:

| Ebene oder Linsengruppe | Radien r | Dicken d | variable Abstände | Brechzahl $n_e$ | Abbezahl $v_e$ |
|---|---|---|---|---|---|
| Unendlichraum zum Objektiv | | | | | |
| LG1 | 55.83000 | | | | |
| | | 4.50000 | | 1.530190 | 76.58 |
| | -55.83000 | | | | |
| | | 2.30000 | | 1.584820 | 40.57 |
| | unendlich | | | | |
| | | | a1 | | |
| LG2 | -35.22750 | | | | |
| | | 1.40000 | | 1.747910 | 44.57 |
| | 9.17300 | | | | |
| | | 2.50000 | | 1.812659 | 25.16 |
| | 25.12050 | | | | |
| | | | a2 | | |
| LG3 | 30.06750 | | | | |
| | | 1.50000 | | 1.812659 | 25.16 |
| | 15.07000 | | | | |
| | | 1.80000 | | 1.489140 | 70.23 |
| | 18.96900. | | | | |
| | | 2.90000 | | 1.716160 | 53.61 |
| | -44.98960 | | | | |
| Blende | | 1.00000 | | | |
| | unendlich | | | | |
| | | | a3 | | |
| LG4 | -47.65660 | | | | |
| | | 1.30000 | | 1.620680 | 49.54 |
| | 7.94400 | | | | |
| | | 2.90000 | | 1.624080 | 36.11 |
| | 41.86920 | | | | |
| | | | a4 | | |
| Unendlichraum zur Tubuslinse | | | | | |

In Fig.1 und in allen nachfolgenden Darstellungen sind die optischen Baugruppen, jeweils objektseitig beginnend, mit LG1 bis LG4 bzw. LG5 bezeichnet. Dabei sind stets die Baugruppen LG2 und LG4 in Relation zu den übrigen Baugruppen in Richtung der optischen Achse des Zoomsystems beweglich und zu diesem Zweck mit Antrieben, bevorzugt mit Schrittmotoren, gekoppelt.

Die Bewegungscharakteristik des Zoomsystems aus Fig.1 ist in Fig.2 dargestellt. Daraus ist ersichtlich, dass der Anfangswert der Vergrößerung bei 0.32 und der Endwert bei 4.0 liegen und somit der Vergrößerungsbereich 12.5x beträgt. Ausgewählte Vergrößerungen ergeben sich bei folgenden Abstandseinstellungen:

| Vergrößerung | 4.0x | 1.0x | 0.32x |
|---|---|---|---|
| a1 | 68.657 | 39.472 | 2.098 |
| a2 | 11.189 | 40.373 | 77.747 |
| a3 | 28.039 | 12.818 | 3.104 |
| a4 | 0.016 | 15.237 | 24.951 |

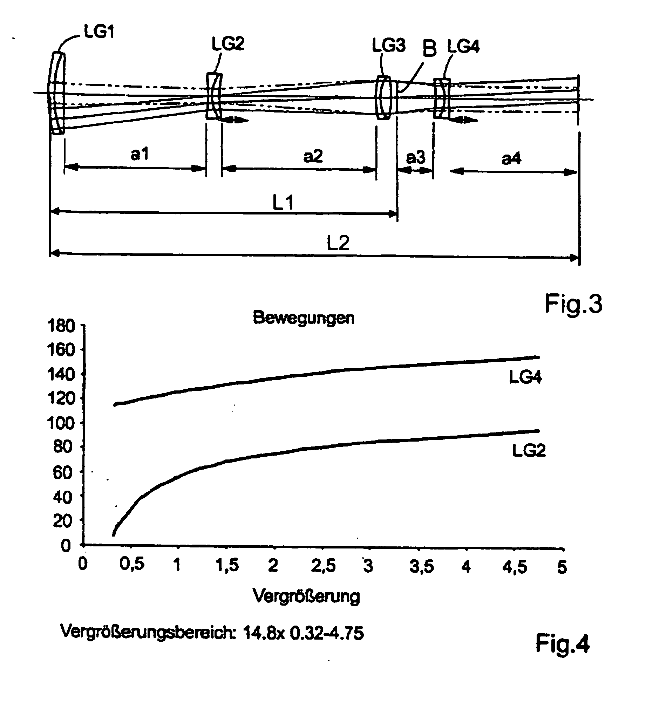

Das erfindungsgemäße Stereomikroskop mit afokalen Zoomsystem nach Fig.3 umfasst für einen Zoombereich von > 12 bis 20 bei einer Baulänge von 160 mm vier optische Baugruppen und hat folgende Systemdaten:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 56.75149 | | | | |
| | | 1.80000 | | 1.584820 | 40.57 |
| | 34.34561 | | | | |
| | | 3.23632 | | 1.487940 | 84.07 |
| | 399.82663 | | | | |
| | | | a1 | | |
| LG2 | -42. 5.1193 | | | | |
| | | 1.20000 | | 1.747910 | 44.44 |
| | 12.24683 | | | | |
| | | 2.43354 | | 1.812639 | 25.16 |
| | 35.41005 | | | | |
| | | | a2 | | |
| LG3 | 27.81808 | | | | |
| | | 1.50000 | | 1.616640 | 44.27 |
| | 11.53722 | | | | |
| | | 3.35345 | | 1.530190 | 76.58 |
| | -38.54358 | | | | |
| Blende | | 2.00000 | | | |
| | unendlich | | | | |
| | | | a3 | | |
| LG4 | -35.44956 | | | | |
| | | 2.96303 | | 1.652220 | 33.60 |
| | -11.34526 | | | | |
| | | 1.30000 | | 1.620680 | 49.54 |
| | 82.22593 | | | | |
| | | | a4 | | |
| Unendlichraum zur Tubuslinse | | | | | |

Die Bewegungscharakteristik des Zoomsystems aus Fig.3 ist in Fig.4 dargestellt. Daraus ist ersichtlich, dass der Anfangswert der Vergrößerung bei 0.32 und der Endwert bei 4.75 liegen und somit der Vergrößerungsbereich 14.8x beträgt. Ausgewählte Vergrößerungen ergeben sich bei folgenden Abstandseinstellungen:

| Vergrößerung | 4.75x | 1.25x | 0.32x |
|---|---|---|---|
| a1 | 90.889 | 57.703 | 2.392 |
| a2 | 5.936 | 39.122 | 94.433 |
| a3 | 44.126 | 17.262 | 2.244 |
| a4 | 0.000 | 26.864 | 41.882 |

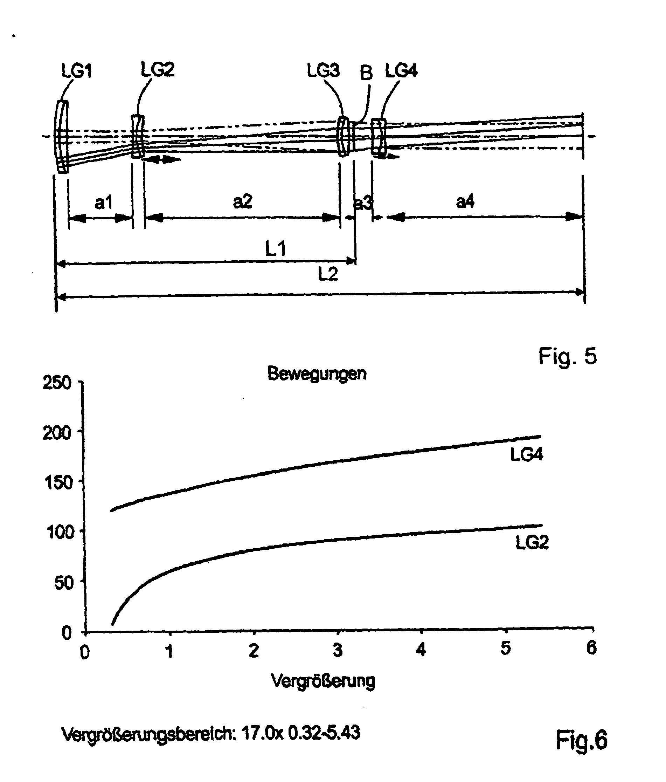

Das erfindungsgemäße Stereomikroskop mit afokalen Zoomsystem nach Fig.5 umfasst für einen Zoombereich > 12 bis 20 bei einer Baulänge von 197 mm vier optische Baugruppen und hat folgende Systemdaten:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 59.45081 | | | | |
| | | 1.80000 | | 1.584820 | 40.57 |
| | 36.56531 | | | | |
| | | 3.09611 | | 1.987990 | 84.07 |
| | 323.75358 | | | | |
| | | | a1 | | |
| LG2 | -47.70503 | | | | |
| | | 1.20000 | | 1.747910 | 44.44 |
| | 13.26264 | | | | |
| | | 2.44516 | | 1.812639 | 25.16 |
| | 37.95059 | | | | |
| | | | a2 | | |
| LG3 | 31.52821 | | | | |
| | | 1.50000 | | 1.616640 | 44.27 |
| | 13.05517 | | | | |
| | | 3.14976 | | 1.530190 | 76.58 |
| | -46.21433 | | | | |
| Blende | | 2.00000 | | | |
| | unendlich | | | | |
| | | | a3 | | |
| LG4 | -46.50621 | | | | |
| | | 3.63255 | | 1.652220 | 33.60 |
| | -13.80465 | | | | |
| | 86.38284 | 1.30000 | | 1.620680 | 49.54 |
| | | | a4 | | |
| Unendlichraum zur Tubuslinse | | | | | |

Die Bewegungscharakteristik des Zoomsystems aus Fig.5 ist in Fig.6 dargestellt. Daraus ist ersichtlich, dass der Anfangswert der Vergrößerung bei 0.32 und der Endwert bei 5.43 liegen und somit der Vergrößerungsbereich 17.0x beträgt. Ausgewählte Vergrößerungen ergeben sich bei folgenden Abstandseinstellungen:

| Vergrößerung | 5.43x | 1.27x | 0.32x |
|---|---|---|---|
| a1 | 90.390 | 61.772 | 2.409 |
| a2 | 5.284 | 40.902 | 100.265 |
| a3 | 73.960 | 23.866 | 2.328 |
| a4 | 0.000 | 50.094 | 71.632 |

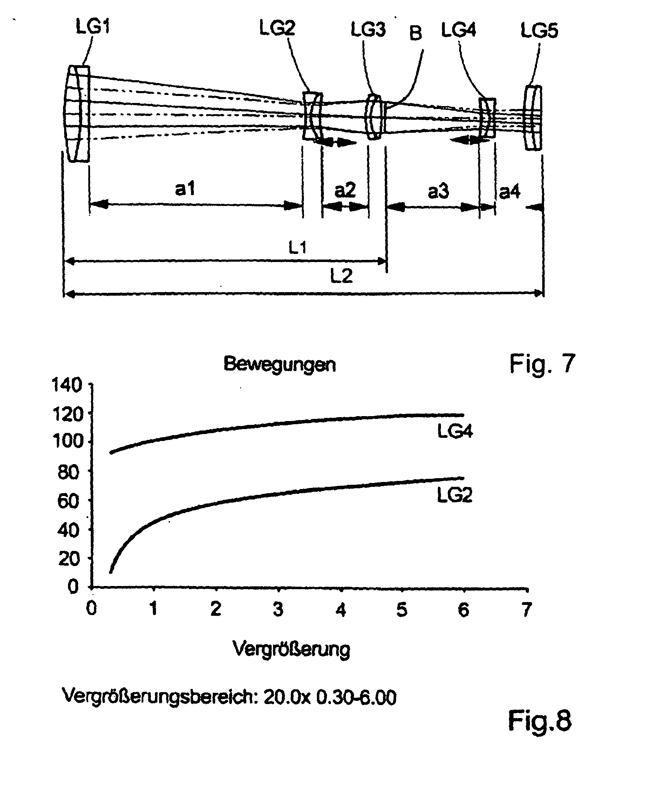

Das erfindungsgemäße Stereomikroskop mit afokalen Zoomsystem nach Fig.7 umfasst für einen Zoombereich von > 20 bei einer Baulänge von 130 mm fünf optische Baugruppen und hat folgende Systemdaten:

| Ebene oder Linsengruppe | Radien r | Dicken d | Abstände a | Brechzahl $n_e$ | Abbezahl $\nu_e$ |
|---|---|---|---|---|---|
| Unendlichraum zum Objektiv | | | | | |
| LG1 | 55.83000 | | | | |
| | | 4.50000 | | 1.530190 | 76.58 |
| | -55.83000 | | | | |
| | | 2.30000 | | 1.584820 | 40.57 |
| | unendlich | | | | |
| | | | a1 | | |
| LG2 | -29.63900 | | | | |
| | | 1.40000 | | 1.747910 | 44.57 |
| | 9.57600 | | | | |
| | | 2.50000 | | 1.812659 | 25.16 |
| | 28.59370 | | | | |
| | | | a2 | | |
| LG3 | 17.66550 | | | | |
| | | 1.40000 | | 1.708240 | 39.12 |
| | 9.44240 | | | | |
| | | 3.15000 | | 1.530190 | 76.58 |
| | -30.94640 | | | | |
| Blende | | 1.00000 | | | |
| | unendlich | | | | |
| | | | a3 | | |
| LG4 | -27.97950 | | | | |
| | | 2.10000 | | 1.812659 | 25.16 |
| | -10.59190 | | | | |
| | | 1.30000 | | 1.747910 | 44.57 |
| | 38.12900 | | | | |
| | | | a4 | | |
| LG5 | 54.24520 | | | | |
| | | 2.05000 | | 1.708240 | 39.12 |
| | 33.25480 | | | | |
| | | 2.28000 | | 1.489140 | 70.23 |
| | unendlich | | | | |
| Unendlichraum zur Tubuslinse | | | | | |

Die Bewegungscharakteristik des Zoomsystems aus Fig.7 ist in Fig.8 dargestellt. Daraus ist ersichtlich, dass der Anfangswert der Vergrößerung bei 0.3 und der Endwert bei 6.0 liegen und somit der Vergrößerungsbereich 20.0x beträgt. Ausgewählte Vergrößerungen ergeben sich bei folgenden Abstandseinstellungen:

| Vergrößerung | 6.00x | 2.00x | 0.30x |
|---|---|---|---|
| a1 | 69.713 | 51.441 | 2.608 |
| a2 | 2.034 | 20.306 | 69.139 |
| a3 | 32.226 | 20.448 | 4.346 |
| a4 | 2.047 | 13.824 | 29.927 |

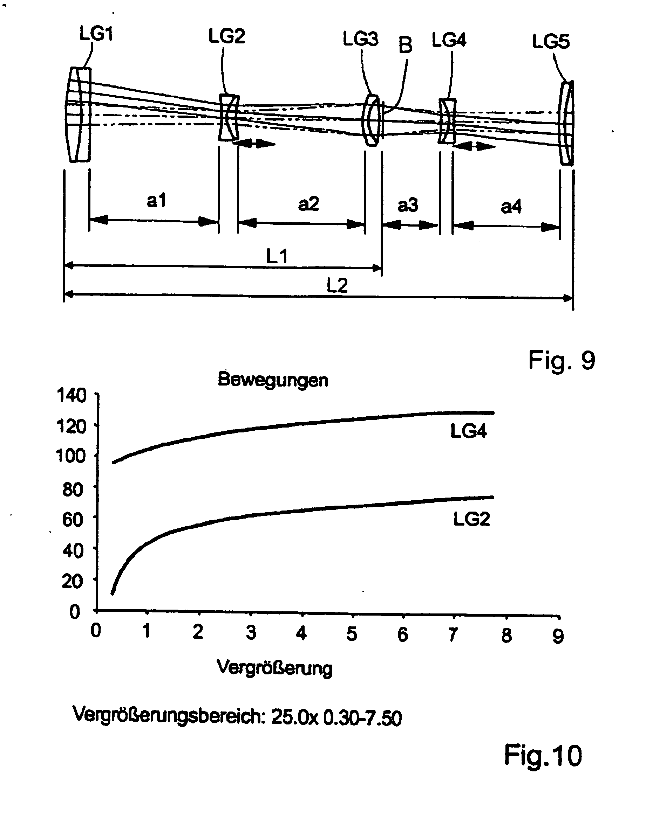

Das erfindungsgemäße Stereomikroskop mit afokalen Zoomsystem nach Fig.9 umfasst für einen Zoombereich von > 20 bei einer Baulänge von 140 mm fünf optische Baugruppen und hat folgende Systemdaten:

| Ebene oder Linsengruppe | Radien r | Dicken d | Abstände a | Brechzahl $n_e$ | Abbezahl $v_e$ |
|---|---|---|---|---|---|
| Unendlchraum zum Objektiv | | | | | |
| LG1 | 54.46484 | | | | |
| | | 4.50000 | | 1.530190 | 76.58 |
| | -54.53767 | | | | |
| | | 2.30000 | | 1.584820 | 40.57 |
| | 95114.5695 | | | | |
| | | | a1 | | |
| LG2 | -28.70630 | | | | |
| | | 1.40000 | | 1.747910 | 44.57 |
| | 8.84044 | | | | |
| | | 2.50000 | | 1.812659 | 25.16 |
| | 26.08074 | | | | |
| | | | a2 | | |
| LG3 | 17.64930 | | | | |
| | | 1.55000 | | 1.708240 | 39.12 |
| | 9.44423 | | | | |
| | | 3.00000 | | 1.530190 | 76.58 |
| | -33.13612 | | | | |
| Blende | | 1.00000 | | | |
| | unendlich | | | | |
| | | | a3 | | |
| LG4 | -26.24859 | | | | |
| | | 2.10000 | | 1.812659 | 25.16 |
| | -10.15678 | | | | |
| | | 1.30000 | | 1.747910 | 44.57 |
| | 39.51109 | | | | |
| | | | a4 | | |
| LG5 | 73.94310 | | | | |
| | | 1.50000 | | 1.708240 | 39.12 |
| | 42.44389 | | | | |
| | | 2.00000 | | 1.489140 | 70.23 |
| | -320.03785 | | | | |
| Unendlichraum zur Tubuslinse | | | | | |

Die Bewegungscharakteristik des Zoomsystems aus Fig.9 ist in Fig.10 dargestellt. Daraus ist ersichtlich, dass der Anfangswert der Vergrößerung bei 0.30 und der Endwert bei 7.50 liegen und somit der Vergrößerungsbereich 25.0x beträgt. Ausgewählte Vergrößerungen ergeben sich bei folgenden Abstandseinstellungen:

| Vergrößerung | 7.50x | 3.08x | 0.30x |
|---|---|---|---|
| a1 | 69.688 | 56.394 | 3.216 |
| a2 | 2.138 | 15.432 | 68.609 |
| a3 | 43.154 | 31.715 | 7.118 |
| a4 | 1.920 | 13.358 | 37.955 |

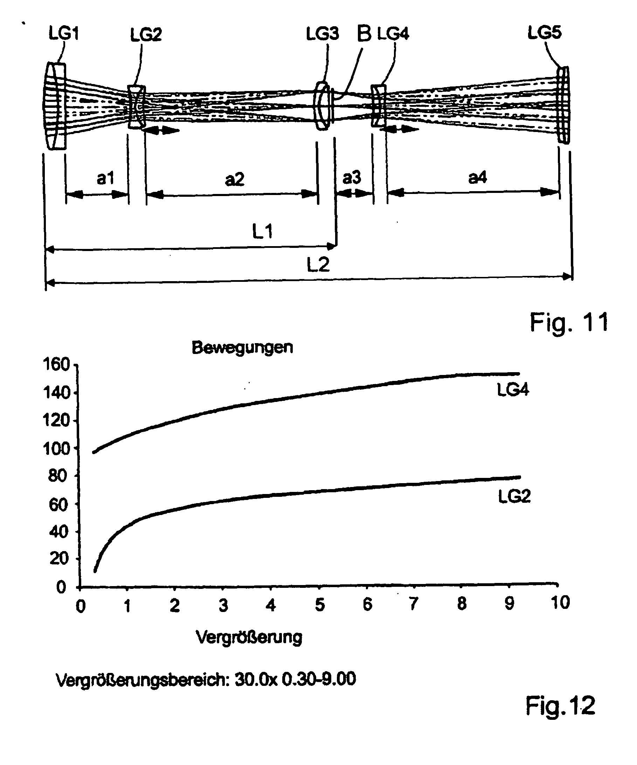

Das erfindungsgemäße Stereomikroskop mit afokalen Zoomsystem nach Fig.11 umfasst für einen Zoombereich von > 12 bis 20 bei einer Baulänge von 160 mm fünf optische Baugruppen und hat folgende Systemdaten:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 54.41669 | | | | |
| | | 4.50000 | | 1.530190 | 76.58 |
| | -53.24124 | | | | |
| | | 2.30000 | | 1.584820 | 40.57 |
| | -23179.171 | | | | |
| | | | a1 | | |
| LG2 | -29.65255 | | | | |
| | | 1.40000 | | 1.747910 | 44.57 |
| | 8.37016 | | | | |
| | | 2.50000 | | 1.812659 | 25.16 |
| | 23.91363 | | | | |
| | | | a2 | | |
| LG3 | 18.62642 | | | | |
| | | 1.55000 | | 1.708240 | 39.12 |
| | 9.95934 | | | | |
| | | 3.00000 | | 1.530190 | 76.58 |
| | -35.01484 | | | | |
| Blende | | 1.00000 | | | |
| | unendlich | | | | |
| | | | a3 | | |
| LG4 | -28.91998 | | | | |
| | | 2.10000 | | 1.812659 | 25.16 |
| | -11.51291 | | | | |
| | | 1.30000 | | 1.747910 | 44.57 |
| | 46.94391 | | | | |
| | | | a4 | | |
| LG5 | 159.19894 | | | | |
| | | 1.50000 | | 1.708240 | 39.12 |
| | 81.58989 | | | | |
| | | 2.00000 | | 1.489140 | 70.99 |
| | -229.49361 | | | | |
| Unendlichraum zur Tubuslinse | | | | | |

Die Bewegungscharakteristik des Zoomsystems aus Fig.11 ist in Fig.12 dargestellt. Daraus ist ersichtlich, dass der Anfangswert der Vergrößerung bei 0.30 und der Endwert bei 9.00 liegen und somit der Vergrößerungsbereich 30.0x beträgt. Ausgewählte Vergrößerungen ergeben sich bei folgenden Abstandseinstellungen:

| Vergrößerung | 9.00x | 3.31x | 0.30x |
|---|---|---|---|
| a1 | 69.688 | 56.490 | 3.698 |
| a2 | 2.138 | 15.336 | 68.128 |
| a3 | 63.059 | 23.234 | 8.411 |
| a4 | 1.967 | 33.862 | 56.615 |

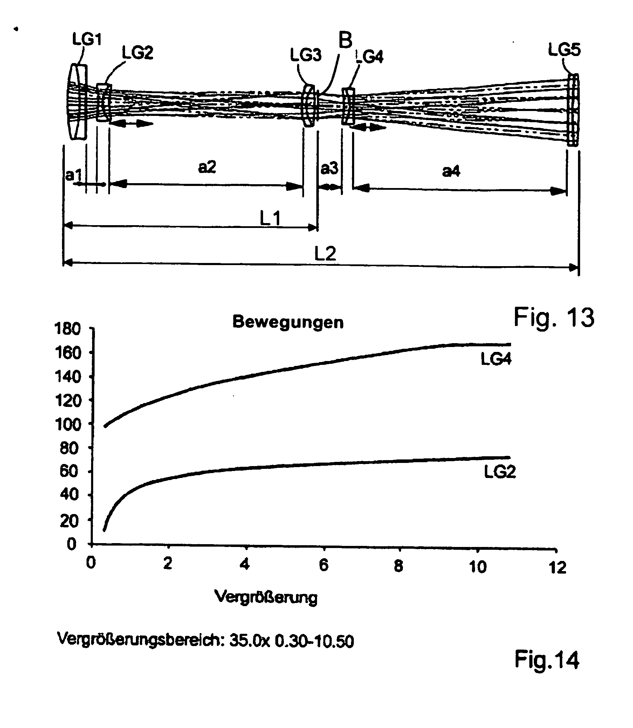

Das erfindungsgemäße Stereomikroskop mit afokalen Zoomsystem nach Fig.13umfasst für einen Zoombereich von > 20 bei einer Baulänge von 180 mm fünf optische Baugruppen und hat folgende Systemdaten:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 54.18919 | | | | |
| | | 4.50000 | | 1.530190 | 76.58 |
| | -52.34592 | | | | |
| | | 2.30000 | | 1.584820 | 40.57 |
| | -16391.102 | | | | |
| | | | a1 | | |
| LG2 | -29.79285 | | | | |
| | | 1.40000 | | 1.747910 | 44.57 |
| | 8.12478 | | | | |
| | | 2.50000 | | 1.812659 | 25.16 |
| | 22.97472 | | | | |
| | | | a2 | | |
| LG3 | 19.38349 | | | | |
| | | 1.55000 | | 1.708240 | 39.12 |
| Blende | 10.35778 | | | | |
| | | 3.00000 | | 1.530190 | 76.58 |
| | -36.27659 | | | | |
| | | 1.00000 | | | |
| | unendlich | | | | |
| | | | a3 | | |
| LG4 | -29.29687 | | | | |
| | | 2.10000 | | 1.812659 | 25.16 |
| | -12.25144 | | | | |
| | | 1.30000 | | 1.747910 | 44.57 |
| | 56.73263 | | | | |
| | | | a4 | | |
| LG5 | 402.00502 | | | | |
| | | 1.50000 | | 1.708240 | 39.12 |
| | 147.33917 | | | | |
| | | 2.00000 | | 1.489140 | 70.99 |
| | -182.38036 | | | | |
| Unendlichraum zur Tubuslinse | | | | | |

Die Bewegungscharakteristik des Zoomsystems aus Fig.13 ist in Fig.14 dargestellt. Daraus ist ersichtlich, dass der Anfangswert der Vergrößerung bei 0.30 und der Endwert bei 10.50 liegen und somit der Vergrößerungsbereich 35.0x beträgt. Ausgewählte Vergrößerungen ergeben sich bei folgenden Abstandseinstellungen:

| Vergrößerung | 10.50x | 3.54x | 0.30x |
|---|---|---|---|
| a1 | 69.688 | 56.613 | 4.310 |
| a2 | 2.138 | 15.213 | 67.516 |
| a3 | 83.008 | 51.170 | 9.573 |
| a4 | 2.025 | 33.862 | 75.459 |

**Patentansprüche**

1.  Stereomikroskop mit einem afokalen Zoomsystem, umfassend vier oder fünf optische Baugruppen (LG1, LG2, LG3, LG4, LG5), von denen zwei Gruppen zwecks Änderung der Vergrößerung relativ zueinander und zu den übrigen Baugruppen beweglich sind, wobei objektseitig beginnend

    - eine erste Baugruppe (LG1) ortsfest mit positiver Brechkraft,
    - eine zweite Baugruppe (LG2) beweglich mit negativer Brechkraft,
    - eine dritte Baugruppe (LG3) ortsfest mit positiver Brechkraft und
    - eine vierte Baugruppe (LG4) beweglich mit negativer Brechkraft ausgeführt sind, oder zusätzlich
    - eine fünfte Baugruppe (LG5) ortsfest mit positiver Brechkraft vorgesehen ist, und
    - jede einstellbare Vergrößerung durch eine gleichgerichtete Verschiebebewegung der beiden beweglichen optischen Baugruppen (LG2, LG4)über den gesamten Zoombereich realisiert wird,
    - zwischen der dritten Linsengruppe (LG3) und der vierten Linsengruppe (LG4) eine ortsfeste Blende (B) angeordnet ist und
    - dass zum Zwecke der Beibehaltung der Bildschärfe in jeder beliebigen Zoomstellung für einen Zoombereich von > 12 die zweite Baugruppe (LG2) und die vierte Baugruppe (LG4) mit Antriebsmitteln versehen sind, die unterschiedliche Verschiebegeschwindigkeiten realisieren,
    - wobei die Vergrößerung am geringsten ist, wenn der Abstand der beiden beweglichen Baugruppen (LG2, LG4) zur ersten Baugruppe (LG1) am geringsten ist.

2.  Stereomikroskop mit einem afokalen Zoomsystem nach Anspruch 1, **gekennzeichnet durch** folgende Bedingungen für die Vergrößerung $\Gamma$:

$$- \Gamma_{min} \geq 0{,}31$$

$$- 3{,}5 \leq \Gamma_{max} \leq 5{,}5$$

3.  Stereomikroskop mit einem afokalen Zoomsystem nach den Ansprüchen 1 und 2 ausgeführt für einen Zoombereich von > 12 bis 20 und für eine Baulänge von 130 mm mit folgenden Kenngrößen:

| Ebene oder Linsengruppe | Radien r | Dicken d | variable Abstände | Brechzahl $n_e$ | Abbezahl $v_e$ |
|---|---|---|---|---|---|
| Unendlichraum zum Objektiv | | | | | |
| LG1 | 55.83000 | | | | |
| | | 4.50000 | | 1.530190 | 76.58 |
| | -55.83000 | | | | |
| | | 2.30000 | | 1.584820 | 40.57 |
| | unendlich | | | | |
| | | | a1 | | |
| LG2 | -35.22750 | | | | |
| | | 1.40000 | | 1.747910 | 44.57 |
| | 9.17300 | | | | |
| | | 2.50000 | | 1.812659 | 25.16 |
| | 25.12050 | | | | |
| | | | a2 | | |
| LG3 | 30.06750 | | | | |
| | | 1.50000 | | 1.812659 | 25.16 |
| | 15.07000 | | | | |
| | | 1.80000 | | 1.489140 | 70.23 |
| | 18.96900 | | | | |

(fortgesetzt)

| Ebene oder Linsengruppe | Radien r | Dicken d | variable Abstände | Brechzahl $n_e$ | Abbezahl $v_e$ |
|---|---|---|---|---|---|
| Unendlichraum zum Objektiv | | | | | |
| | | 2.90000 | | 1.716160 | 53.61 |
| | -44.98960 | | | | |
| Blende | | 1.00000 | | | |
| | unendlich | | | | |
| | | | a3 | | |
| LG4 | -47.65660 | | | | |
| | | 1.30000 | | 1.620680 | 49.54 |
| | 7.94400 | | | | |
| | | 2.90000 | | 1.624080 | 36.11 |
| | 41.86920 | | | | |
| | | | a4 | | |
| Unendlichraum zur Tubuslinse | | | | | |

| Vergrößerung Γ | 4.0x | 1.0x | 0.32x |
|---|---|---|---|
| a1 | 68.657 | 39.472 | 2.098 |
| a2 | 11.189 | 40.373 | 77.747 |
| a3 | 28.039 | 12.818 | 3.104 |
| a4 | 0.016 | 15.237 | 24.951 |

4. Stereomikroskop mit einem afokalen Zoomsystem nach den Ansprüchen 1 und 2, ausgeführt für einen Zoombereich von > 12 bis 20 und für eine Baulänge von 160 mm mit folgenden Kenngrößen:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 56.75149 | | | | |
| | | 1.80000 | | 1.584820 | 40.57 |
| | 34.34561 | | | | |
| | | 3.23632 | | 1.487940 | 84.07 |
| | 399.82663 | | | | |
| | | | a1 | | |
| LG2 | -42.51193 | | | | |
| | | 1.20000 | | 1.747910 | 44.44 |
| | 12.24683 | | | | |
| | | 2.43354 | | 1.812639 | 25.16 |
| | 35.41005 | | | | |
| | | | a2 | | |
| LG3 | 27.81808 | | | | |
| | | 1.50000 | | 1.616640 | 44.27 |
| | 11.53722 | | | | |
| | | 3.35345 | | 1.530190 | 76.58 |
| | -38.54358 | | | | |

(fortgesetzt)

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| Blende | | 2.00000 | | | |
| | unendlich | | | | |
| | | | a3 | | |
| LG4 | -35.44956 | | | | |
| | | 2.96303 | | 1.652220 | 33.60 |
| | -11.34526 | | | | |
| | | 1.30000 | | 1.620680 | 49.54 |
| | 86.38284 | | | | |
| | | | a4 | | |
| Unendlichraum zur Tubuslinse | | | | | |

| Vergrößerung Γ | 4.75x | 1.25x | 0.32x |
|---|---|---|---|
| a1 | 90.889 | 57.703 | 2.392 |
| a2 | 5.936 | 39.122 | 94.433 |
| a3 | 44.126 | 17.262 | 2.244 |
| a4 | 0.000 | 26.864 | 41.882 |

**5.** Stereomikroskop mit einem afokalen Zoomsystem nach den Ansprüchen 1 und 2, ausgeführt für einen Zoombereich von > 12 bis 20 und für eine Baulänge von 197 mm mit folgenden Kenngrößen:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 59.45081 | | | | |
| | | 1.80000 | | 1.584820 | 40.57 |
| | 36.56531 | | | | |
| | | 3.09611 | | 1.487940 | 84.07 |
| | 323.75358 | | | | |
| | | | a1 | | |
| LG2 | -47.70503 | | | | |
| | | 1.20000 | | 1.747910 | 44.44 |
| | 13.26264 | | | | |
| | | 2.44516 | | 1.812639 | 25.16 |
| | 37.95059 | | | | |
| | | | a2 | | |
| LG3 | 31.52821 | | | | |
| | | 1.50000 | | 1.616640 | 44.27 |
| | 13.05517 | | | | |
| | | 3.14976 | | 1.530190 | 76.58 |
| | -46.21433 | | | | |
| | | 2.00000 | | | |
| | unendlich | | | | |

(fortgesetzt)

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| | | | a3 | | |
| LG4 | -46.50621 | | | | |
| | | 3.63255 | | 1.652220 | 33.60 |
| | -13.80465 | | | | |
| | | 1.30000 | | 1.620680 | 49.54 |
| | 82.22593 | | | | |
| | | | a4 | | |
| Unendlichraum zur Tubuslinse | | | | | |

| Vergrößerung $\Gamma$ | 5.43x | 1.27x | 0.32x |
|---|---|---|---|
| a1 | 90.390 | 61.772 | 2.409 |
| a2 | 5.284 | 40.902 | 100.265 |
| a3 | 73.960 | 23.866 | 2.328 |
| a4 | 0.000 | 50.094 | 71.632 |

**6.** Stereomikroskop mit einem afokalen Zoomsystem nach Anspruch 1, umfassend fünf optische Baugruppen, wobei eine fünfte Baugruppe ortsfest mit positiver Brechkraft ausgeführt ist.

**7.** Stereomikroskop mit einem afokalen Zoomsystem nach einem der Ansprüche 8 bis 9, **gekennzeichnet durch** folgende Bedingungen :

$$- \Gamma_{min} \geq 0{,}29$$

$$- 5 \leq \Gamma_{max} \leq 11$$

**8.** Stereomikroskop mit einem afokalen Zoomsystem nach den Ansprüchen 1, 6 und 7, ausgeführt für einen Zoombereich von > 20 und für eine Baulänge von 130 mm mit folgenden Kenngrößen:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 55.83000 | | | | |
| | | 4.50000 | | 1.530190 | 76.58 |
| | -55.83000 | | | | |
| | | 2.30000 | | 1.584820 | 40.57 |
| | unendlich | | | | |
| | | | a1 | | |

(fortgesetzt)

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG2 | -29.63900 | | | | |
| | | 1.40000 | | 1.747910 | 44.57 |
| | 9.57600 | | | | |
| | | 2.50000 | | 1.812659 | 25.16 |
| | 28.59370 | | | | |
| | | | a2 | | |
| LG3 | 17.66550 | | | | |
| | | 1.40000 | | 1.708240 | 39.12 |
| | 9.44240 | | | | |
| | | 3.15000 | | 1.530190 | 76.58 |
| | -30.94640 | | | | |
| Blende | | 1.00000 | | | |
| | unendlich | | | | |
| | | | a3 | | |
| LG4 | -27.97950 | | | | |
| | | 2.10000 | | 1.812659 | 25.16 |
| | -10.59190 | | | | |
| | | 1.30000 | | 1.747910 | 44.57 |
| | 38.12900 | | | | |
| | | | a4 | | |
| LG5 | 54.24520 | | | | |
| | | 2.05000 | | 1.708240 | 39.12 |
| | 33.25480 | | | | |
| | | 2.28000 | | 1.489140 | 70.23 |
| | unendlich | | | | |
| Unendlichraum zur Tubuslinse | | | | | |

| Vergrößerung Γ | 6.00x | 2.00x | 0.30x |
|---|---|---|---|
| a1 | 69.713 | 51.441 | 2.608 |
| a2 | 2.034 | 20.306 | 69.139 |
| a3 | 32.226 | 20.448 | 4.346 |
| a4 | 2.047 | 13.824 | 29.927 |

**9.** Stereomikroskop mit einem afokalen Zoomsystem nach Ansprüchen 1, 6 und 7, ausgeführt für einen Zoombereich von > 20 und für eine Baulänge von 140 mm mit folgenden Kenngrößen:

| Ebene oder Linsengruppe | Radien r | Dicken d | Abstände a | Brechzahl $n_e$ | Abbezahl $v_e$ |
|---|---|---|---|---|---|
| Unendlichraum zum Objektiv | | | | | |
| LG1 | 54.46484 | | | | |
| | | 4.50000 | | 1.530190 | 76.58 |
| | -54.53767 | | | | |
| | | 2.30000 | | 1.584820 | 40.57 |
| | 95114.5695 | | | | |
| | | | a1 | | |
| LG2 | -28.70630 | | | | |
| | | 1.40000 | | 1.747910 | 44.57 |
| | 8.84044 | | | | |
| | | 2.50000 | | 1.812659 | 25.16 |
| | 26.08074 | | | | |
| | | | a2 | | |
| LG3 | 17.64930 | | | | |
| | | 1.55000 | | 1.708240 | 39.12 |
| | 9.44423 | | | | |
| | | 3.00000 | | 1.530190 | 76.58 |
| | -33.13612 | | | | |
| Blende | | 1.00000 | | | |
| | unendlich | | | | |
| | | | a3 | | |
| LG4 | -26.24859 | | | | |
| | | 2.10000 | | 1.812659 | 25.16 |
| | -10.15678 | | | | |
| | | 1.30000 | | 1.747910 | 44.57 |
| | 39.51109 | | | | |
| | | | a4 | | |
| LG5 | 73.94310 | | | | |
| | | 1.50000 | | 1.708240 | 39.12 |
| | 42.44389 | | | | |
| | | 2.00000 | | 1.489140 | 70.23 |
| | -320.03785 | | | | |
| Unendlichraum zur Tubuslinse | | | | | |

| Vergrößerung Γ | 7.50x | 3.08x | 0.30x |
|---|---|---|---|
| a1 | 69.688 | 56.394 | 3.216 |
| a2 | 2.138 | 15.432 | 68.609 |
| a3 | 43.154 | 31.715 | 7.118 |
| a4 | 1.920 | 13.358 | 37.955 |

**10.** Stereomikroskop mit einem afokalen Zoomsystem nach Ansprüche 1, 6 und 7, ausgeführt für einen Zoombereich von > 12 bis 20 und für eine Baulänge von 160 mm mit folgenden Kenngrößen:

| Ebene oder Linsengruppe | Radien r | Dicken d | Abstände a | Brechzahl $n_e$ | Abbezahl $\nu_e$ |
|---|---|---|---|---|---|
| Unendlichraum zum Objektiv | | | | | |
| LG1 | 54.41669 | | | | |
| | | 4.50000 | | 1.530190 | 76.58 |
| | -53.24124 | | | | |
| | | 2.30000 | | 1.584820 | 40.57 |
| | -23179.171 | | | | |
| | | | a1 | | |
| LG2 | -29.65255 | | | | |
| | | 1.40000 | | 1.747910 | 44.57 |
| | 8.37016 | | | | |
| | | 2.50000 | | 1.812659 | 25.16 |
| | 23.91363 | | | | |
| | | | a2 | | |
| LG3 | 18.62642 | | | | |
| | | 1.55000 | | 1.708240 | 39.12 |
| | 9.95934 | | | | |
| | | 3.00000 | | 1.530190 | 76.58 |
| | -35.01484 | | | | |
| Blende | | 1.00000 | | | |
| | unendlich | | | | |
| | | | a3 | | |
| LG4 | -28.91998 | | | | |
| | | 2.10000 | | 1.812659 | 25.16 |
| | -11.51291 | | | | |
| | | 1.30000 | | 1.747910 | 44.57 |
| | 46.94391 | | | | |
| | | | a4 | | |
| LG5 | 159.19894 | | | | |
| | | 1.50000 | | 1.708240 | 39.12 |
| | 81.58989 | | | | |
| | | 2.00000 | | 1.489140 | 70.99 |
| | -229.49361 | | | | |
| Unendlichraum zur Tubuslinse | | | | | |

| Vergrößerung $\Gamma$ | 9.00x | 3.31x | 0.30x |
|---|---|---|---|
| a1 | 69.688 | 56.490 | 3.698 |
| a2 | 2.138 | 15.336 | 68.128 |
| a3 | 63.059 | 23.234 | 8.411 |
| a4 | 1.967 | 33.862 | 56.615 |

**11.** Stereomikroskop mit einem afokalen Zoomsystem nach Ansprüchen 1, 6 und 7, ausgeführt für einen Zoombereich von > 20 und für eine Baulänge von 180 mm mit folgenden Kenngrößen:

| Ebene oder Linsengruppe | Radien r | Dicken d | Abstände a | Brechzahl $n_e$ | Abbezahl $\nu_e$ |
|---|---|---|---|---|---|
| Unendlichraum zum Objektiv | | | | | |
| LG1 | 54.18919 | | | | |
| | | 4.50000 | | 1.530190 | 76.58 |
| | -52.34592 | | | | |
| | | 2.30000 | | 1.584820 | 40.57 |
| | 16391.102 | | | | |
| | | | a1 | | |
| LG2 | -29.79285 | | | | |
| | | 1.40000 | | 1.747910 | 44.57 |
| | 8.12478 | | | | |
| | | 2.50000 | | 1.812659 | 25.16 |
| | 22.97472 | | | | |
| | | | a2 | | |
| LG3 | 19.38349 | | | | |
| | | 1.55000 | | 1.708240 | 39.12 |
| | 10.35778 | | | | |
| | | 3.00000 | | 1.530190 | 76.58 |
| | -36.27659 | | | | |
| Blende | | 1.00000 | | | |
| | unendlich | | | | |
| | | | a3 | | |
| LG4 | -29.29687 | | | | |
| | | 2.10000 | | 1.812659 | 25.16 |
| | -12.25144 | | | | |
| | | 1.30000 | | 1.747910 | 44.57 |
| | 56.73263 | | | | |
| | | | a4 | | |
| LG5 | 402.00502 | | | | |
| | | 1.50000 | | 1.708240 | 39.12 |
| | 147.33917 | | | | |
| | | 2.00000 | | 1.489140 | 70.99 |
| | 182.38036 | | | | |
| Unendlichraum zur Tubuslinse | | | | | |

| Vergrößerung Γ | 10.50x | 3.54x | 0.30x |
|---|---|---|---|
| a1 | 69.688 | 56.613 | 4.310 |
| a2 | 2.138 | 15.213 | 67.516 |
| a3 | 83.008 | 51.170 | 9.573 |
| a4 | 2.025 | 33.862 | 75.459 |

12. Stereomikroskop mit einem afokalen Zoomsystem nach einem der Ansprüche 1 bis 11, **dadurch gekennzeichnet, dass** die beweglichen optischen Baugruppen mit Antriebseinrichtungen gekoppelt sind, die

- als Trommelkurven,

- als Ritzel und Zahnstange mit Zwangssteuerung durch eine Kurvenscheibe,
- als Zwangssteuerung durch mehrere Kurvenscheiben,
- als motorischer Direktantrieb, bevorzugt mit Schrittmotor, oder
- als Hebesystem mit Differenzbewegung und Zwangssteuerung durch eine Kurvenscheibe ausgeführt sind.

**Claims**

1. Stereomicroscope with an afocal zoom system, comprising four or five optical assemblies (LG1, LG2, LG3, LG4, LG5) of which two groups are movable relative to one another and to the remaining assemblies for the purpose of changing the magnification, in which, starting at the object end,

   - a first assembly (LG1) is embodied fixedly with positive refractive power,
   - a second assembly (LG2) is embodied movably with negative refractive power,
   - a third assembly (LG3) is embodied fixedly with positive refractive power, and
   - a fourth assembly (LG4) is embodied movably with positive refractive power, or additionally
   - a fifth assembly (LG5) is provided fixedly with positive refractive power, and
   - each adjustable magnification is realized by an identically directed displacement movement of the two movable optical assemblies (LG2, LG4) over the entire zoom range,
   - a fixed diaphragm (B) is arranged between the third lens group (LG3) and the fourth lens group (LG4), and
   - in which, for the purpose of maintaining image quality in any desired zoom position for a zoom range of > 12, the second assembly (LG2) and the fourth assembly (LG4) are provided with drive means which implement different displacement rates,
   - the magnification being least when the spacing of the two movable assemblies (LG2, LG4) from the first assembly (LG1) is at its least.

2. Stereomicroscope with an afocal zoom system according to Claim 1, **characterized by** the following conditions for the magnification $\Gamma$:

$$- \; \Gamma_{min} \; \geq \; 0.31$$

$$- \; 3.5 \; \leq \; \Gamma_{max} \; \leq \; 5.5$$

3. Stereomicroscope with an afocal zoom system according to Claims 1 and 2, designed for a zoom range of > 12 to 20 and for an overall length of 130 mm, having the following characteristics:

| Plane or lens group | Radii r | Thicknesses d | Variable spacings | Refractive index $n_e$ | Abbe number $v_e$ |
|---|---|---|---|---|---|
| Infinite space from the objective | | | | | |
| LG1 | 55.83000 | | | | |
| | | 4.50000 | | 1.530190 | 76.58 |
| | -55.83000 | | | | |
| | | 2.30000 | | 1.584820 | 40.57 |
| | infinite | | | | |
| | | | a1 | | |
| LG2 | -35.22750 | | | | |
| | | 1.40000 | | 1.747910 | 44.57 |
| | 9.17300 | | | | |
| | | 2.50000 | | 1.812659 | 25.16 |
| | 25.12050 | | | | |
| | | | a2 | | |

(continued)

| Plane or lens group | Radii r | Thicknesses d | Variable spacings | Refractive index $n_e$ | Abbe number $v_e$ |
|---|---|---|---|---|---|
| Infinite space from the objective | | | | | |
| LG3 | 30.06750 | | | | |
| | | 1.50000 | | 1.812659 | 25.16 |
| | 15.07000 | | | | |
| | | 1.80000 | | 1.489140 | 70.23 |
| | 18.96900 | | | | |
| | | 2.90000 | | 1.716160 | 53.61 |
| | -44.98960 | | | | |
| Diaphragm | | 1.00000 | | | |
| | infinite | | | | |
| | | | a3 | | |
| LG4 | -47.65660 | | | | |
| | | 1.30000 | | 1.620680 | 49.54 |
| | 7.94400 | | | | |
| | | 2.90000 | | 1.624080 | 36.11 |
| | 41.86920 | | | | |
| | | | a4 | | |
| Infinite space from the tube lens | | | | | |

| Magnification Γ | 4.0x | 1.0x | 0.32x |
|---|---|---|---|
| a1 | 68.657 | 39.472 | 2.098 |
| a2 | 11.189 | 40.373 | 77.747 |
| a3 | 28.039 | 12.818 | 3.104 |
| a4 | 0.016 | 15.237 | 24.951 |

4. Stereomicroscope with an afocal zoom system according to Claims 1 and 2, designed for a zoom range of > 12 to 20 and for an overall length of 160 mm, having the following characteristics:

| Plane or lens group | Radii r | Thicknesses d | Spacings a | Refractive index $n_e$ | Abbe number $v_e$ |
|---|---|---|---|---|---|
| Infinite space from the objective | | | | | |
| LG1 | 56.75149 | | | | |
| | | 1.80000 | | 1.584820 | 40.57 |
| | 34.34561 | | | | |
| | | 3.23632 | | 1.487940 | 84.07 |
| | 399.82663 | | | | |
| | | | a1 | | |
| LG2 | -42.51193 | | | | |
| | | 1.20000 | | 1.747910 | 44.44 |
| | 12.24683 | | | | |
| | | 2.43354 | | 1.812639 | 25.16 |
| | 35.41005 | | | | |

(continued)

| Plane or lens group | Radii r | Thicknesses d | Spacings a | Refractive index $n_e$ | Abbe number $v_e$ |
|---|---|---|---|---|---|
| Infinite space from the objective | | | | | |
| | | | a2 | | |
| LG3 | 27.81808 | | | | |
| | | 1.50000 | | 1.616640 | 44.27 |
| | 11.53722 | | | | |
| | | 3.35345 | | 1.530190 | 76.58 |
| | -38.54358 | | | | |
| Diaphragm | | 2.00000 | | | |
| | infinite | | | | |
| | | | a3 | | |
| LG4 | -35.44956 | | | | |
| | | 2.96303 | | 1.652220 | 33.60 |
| | -11.34526 | | | | |
| | | 1.30000 | | 1.620680 | 49.54 |
| | 86.38284 | | | | |
| | | | a4 | | |
| Infinite space from the tube lens | | | | | |

| Magnification Γ | 4.75x | 1.25x | 0.32x |
|---|---|---|---|
| a1 | 90.889 | 57.703 | 2.392 |
| a2 | 5.936 | 39.122 | 94.433 |
| a3 | 44.126 | 17.262 | 2.244 |
| a4 | 0.000 | 26.864 | 41.882 |

5. Stereomicroscope with an afocal zoom system according to Claims 1 and 2, designed for a zoom range of > 12 to 20 and for an overall length of 197 mm, having the following characteristics:

| Plane or lens group | Radii r | Thicknesses d | Spacings a | Refractive index $n_e$ | Abbe number $v_e$ |
|---|---|---|---|---|---|
| Infinite space from the objective | | | | | |
| LG1 | 59.45081 | | | | |
| | | 1.80000 | | 1.584820 | 40.57 |
| | 36.56531 | | | | |
| | | 3.09611 | | 1.487940 | 84.07 |
| | 323.75358 | | | | |
| | | | a1 | | |
| LG2 | -47.70503 | | | | |
| | | 1.20000 | | 1.747910 | 44.44 |
| | 13.26264 | | | | |
| | | 2.44516 | | 1.812639 | 25.16 |
| | 37.95059 | | | | |
| | | | a2 | | |

(continued)

| Plane or lens group | Radii r | Thicknesses d | Spacings a | Refractive index $n_e$ | Abbe number $v_e$ |
|---|---|---|---|---|---|
| Infinite space from the objective | | | | | |
| LG3 | 31.52821 | | | | |
| | | 1.50000 | | 1.616640 | 44.27 |
| | 13.05517 | | | | |
| | | 3.14976 | | 1.530190 | 76.58 |
| | -46.21433 | | | | |
| | | 2.00000 | | | |
| | infinite | | | | |
| | | | a3 | | |
| LG4 | -46.50621 | | | | |
| | | 3.63255 | | 1.652220 | 33.60 |
| | -13.80465 | | | | |
| | | 1.30000 | | 1.620680 | 49.54 |
| | 82.22593 | | | | |
| | | | a4 | | |
| Infinite space from the tube lens | | | | | |

| Magnification $\Gamma$ | 5.43x | 1.27x | 0.32x |
|---|---|---|---|
| a1 | 90.390 | 61.772 | 2.409 |
| a2 | 5.284 | 40.902 | 100.265 |
| a3 | 73.960 | 23.866 | 2.328 |
| a4 | 0.000 | 50.094 | 71.632 |

6. Stereomicroscope with an afocal zoom system according to Claim 1, comprising five optical assemblies, a fifth assembly being embodied fixedly with positive refractive power.

7. Stereomicroscope with an afocal zoom system according to one of Claims 8 to 9, **characterized by** the following conditions:

$$- \Gamma_{min} \geq 0.29$$

$$- 5 \leq \Gamma_{max} \leq 11$$

8. Stereomicroscope with an afocal zoom system according to Claims 1, 6 and 7, designed for a zoom range of > 20 and for an overall length of 130 mm, having the following characteristics:

| Plane or lens group | Radii r | Thicknesses d | Spacings a | Refractive index $n_e$ | Abbe number $v_e$ |
|---|---|---|---|---|---|
| Infinite space from the objective | | | | | |
| LG1 | 55.83000 | | | | |
| | | 4.50000 | | 1.530190 | 76.58 |
| | -55.83000 | | | | |
| | | 2.30000 | | 1.584820 | 40.57 |
| | infinite | | | | |
| | | | a1 | | |
| LG2 | -29.63900 | | | | |
| | | 1.40000 | | 1.747910 | 44.57 |
| | 9.57600 | | | | |
| | | 2.50000 | | 1.812659 | 25.16 |
| | 28.59370 | | | | |
| | | | a2 | | |
| LG3 | 17.66550 | | | | |
| | | 1.40000 | | 1.708240 | 39.12 |
| | 9.44240 | | | | |
| | | 3.15000 | | 1.530190 | 76.58 |
| | -30.94640 | | | | |
| Diaphragm | | 1.00000 | | | |
| | infinite | | | | |
| | | | a3 | | |
| LG4 | -27.97950 | | | | |
| | | 2.10000 | | 1.812659 | 25.16 |
| | -10.59190 | | | | |
| | | 1.30000 | | 1.747910 | 44.57 |
| | 38.12900 | | | | |
| | | | a4 | | |
| LG5 | 54.24520 | | | | |
| | | 2.05000 | | 1.708240 | 39.12 |
| | 33.25480 | | | | |
| | | 2.28000 | | 1.489140 | 70.23 |
| | infinite | | | | |
| Infinite space from the tube lens | | | | | |

| Magnification Γ | 6.00x | 2.00x | 0.30x |
|---|---|---|---|
| a1 | 69.713 | 51.441 | 2.608 |
| a2 | 2.034 | 20.306 | 69.139 |
| a3 | 32.226 | 20.448 | 4.346 |
| a4 | 2.047 | 13.824 | 29.927 |

9. Stereomicroscope with an afocal zoom system according to Claims 1, 6 and 7, designed for a zoom range of > 20 and for an overall length of 140 mm, having the following characteristics:

| Plane or lens group | Radii r | Thicknesses d | Spacings a | Refractive index $n_e$ | Abbe number $v_e$ |
|---|---|---|---|---|---|
| Infinite space from the objective | | | | | |
| LG1 | 54.46484 | | | | |
| | | 4.50000 | | 1.530190 | 76.58 |
| | -54.53767 | | | | |
| | | 2.30000 | | 1.584820 | 40.57 |
| | 95114.5695 | | | | |
| | | | a1 | | |
| LG2 | -28.70630 | | | | |
| | | 1.40000 | | 1.747910 | 44.57 |
| | 8.84044 | | | | |
| | | 2.50000 | | 1.812659 | 25.16 |
| | 26.08074 | | | | |
| | | | a2 | | |
| LG3 | 17.64930 | | | | |
| | | 1.55000 | | 1.708240 | 39.12 |
| | 9.44423 | | | | |
| | | 3.00000 | | 1.530190 | 76.58 |
| | -33.13612 | | | | |
| Diaphragm | | 1.00000 | | | |
| | infinite | | | | |
| | | | a3 | | |
| LG4 | -26.24859 | | | | |
| | | 2.10000 | | 1.812659 | 25.16 |
| | -10.15678 | | | | |
| | | 1.30000 | | 1.747910 | 44.57 |
| | 39.51109 | | | | |
| | | | a4 | | |
| LG5 | 73.94310 | | | | |
| | | 1.50000 | | 1.708240 | 39.12 |
| | 42.44389 | | | | |
| | | 2.00000 | | 1.489140 | 70.23 |
| | -320.03785 | | | | |
| Infinite space from the tube lens | | | | | |

| Magnification Γ | 7.50x | 3.08x | 0.30x |
|---|---|---|---|
| a1 | 69.688 | 56.394 | 3.216 |
| a2 | 2.138 | 15.432 | 68.609 |
| a3 | 43.154 | 31.715 | 7.118 |
| a4 | 1.920 | 13.358 | 37.955 |

**10.** Stereomicroscope with an afocal zoom system according to Claims 1, 6 and 7, designed for a zoom range of > 12 to 20 and for an overall length of 160 mm, having the following characteristics:

| Plane or lens group | Radii r | Thicknesses d | Spacings a | Refractive index $n_e$ | Abbe number $v_e$ |
|---|---|---|---|---|---|
| Infinite space from the objective | | | | | |
| LG1 | 54.41669 | | | | |
| | | 4.50000 | | 1.530190 | 76.58 |
| | -53.24124 | | | | |
| | | 2.30000 | | 1.584820 | 40.57 |
| | -23179.171 | | | | |
| | | | a1 | | |
| LG2 | -29.65255 | | | | |
| | | 1.40000 | | 1.747910 | 44.57 |
| | 8.37016 | | | | |
| | | 2.50000 | | 1.812659 | 25.16 |
| | 23.91363 | | | | |
| | | | a2 | | |
| LG3 | 18.62642 | | | | |
| | | 1.55000 | | 1.708240 | 39.12 |
| | 9.95934 | | | | |
| | | 3.00000 | | 1.530190 | 76.58 |
| | -35.01484 | | | | |
| Diaphragm | | 1.00000 | | | |
| | infinite | | | | |
| | | | a3 | | |
| LG4 | -28.91998 | | | | |
| | | 2.10000 | | 1.812659 | 25.16 |
| | -11.51291 | | | | |
| | | 1.30000 | | 1.747910 | 44.57 |
| | 46.94391 | | | | |
| | | | a4 | | |
| LG5 | 159.19894 | | | | |
| | | 1.50000 | | 1.708240 | 39.12 |
| | 81.58939 | | | | |
| | -229.49361 | 2.00000 | | 1.489140 | 70.99 |
| Infinite space from the tube lens | | | | | |

| Magnification Γ | 9.00x | 3.31x | 0.30x |
|---|---|---|---|
| a1 | 69.688 | 56.490 | 3.698 |
| a2 | 2.138 | 15.336 | 68.128 |
| a3 | 63.059 | 23.234 | 8.411 |
| a4 | 1.967 | 33.862 | 56.615 |

**11.** Stereomicroscope with an afocal zoom system according to Claims 1, 6 and 7, designed for a zoom range of > 20 and for an overall length of 180 mm, having the following characteristics:

| Plane or lens group | Radii r | Thicknesses d | Spacings a | Refractive index $n_e$ | Abbe number $v_e$ |
|---|---|---|---|---|---|
| Infinite space from the objective | | | | | |
| LG1 | 54.18919 | | | | |
| | | 4.50000 | | 1.530190 | 76.58 |
| | -52.34592 | | | | |
| | | 2.30000 | | 1.584820 | 40.57 |
| | -16391.102 | | | | |
| | | | a1 | | |
| LG2 | -29.79285 | | | | |
| | | 1.40000 | | 1.747910 | 44.57 |
| | 8.12478 | | | | |
| | | 2.50000 | | 1.812659 | 25.16 |
| | 22.97472 | | | | |
| | | | a2 | | |
| LG3 | 19.38349 | | | | |
| | | 1.55000 | | 1.708240 | 39.12 |
| | 10.35773 | | | | |
| | | 3.00000 | | 1.530190 | 76.58 |
| | -39.27659 | | | | |
| Diaphragm | | 1.00000 | | | |
| | infinite | | | | |
| | | | a3 | | |
| LG4 | -29.29687 | | | | |
| | | 2.10000 | | 1.812659 | 25.16 |
| | -12.25144 | | | | |
| | | 1.30000 | | 1.747910 | 44.57 |
| | 56.73263 | | | | |
| | | | a4 | | |
| LG5 | 402.00502 | | | | |
| | | 1.50000 | | 1.708240 | 39.12 |
| | 147.33917 | | | | |
| | | 2.00000 | | 1.489140 | 70.99 |
| | -182.38036 | | | | |
| Infinite space from the tube lens | | | | | |

| Magnification Γ | 10.50x | 3.54x | 0.30x |
|---|---|---|---|
| a1 | 69.688 | 56.613 | 4.310 |
| a2 | 2.138 | 15.213 | 67.516 |
| a3 | 83.008 | 51.170 | 9.573 |
| a4 | 2.025 | 33.862 | 75.459 |

**12.** Stereomicroscope with an afocal zoom system according to one of Claims 1 to 11, **characterized in that** the movable optical assemblies are coupled to drive devices which are embodied

    - as drum cams

- as pinion and rack with positive control by means of a cam disc,
- as positive control by means of a polarity of cam discs,
- as direct motor drive, preferably with a stepping motor, or
- as a lifting system with differential movement and positive control by means of a cam disc.

**Revendications**

1. Stéréomicroscope muni d'un système de grossissement afocal, comprenant quatre ou cinq sous-ensembles optiques (LG1, LG2, LG3, LG4, LG5) dont deux sont mobiles l'un par rapport à l'autre et par rapport aux autres sous-ensembles en vue de modifier le grossissement, l'exécution en commençant par le côté de l'objet étant

   - un premier sous-ensemble (LG1) fixe avec une réfringence positive,
   - un deuxième sous-ensemble (LG2) mobile avec une réfringence négative,
   - un troisième sous-ensemble (LG3) fixe avec une réfringence positive,
   - un quatrième sous-ensemble (LG4) mobile avec une réfringence négative ou, en plus,
   - un cinquième sous-ensemble (LG5) fixe avec une réfringence positive étant prévu, et
   - chaque grossissement réglable étant réalisé par un mouvement de translation dans le même sens des deux sous-ensembles optiques mobiles (LG2, LG4) sur toute la plage de grossissement,
   - un diaphragme (B) fixe étant disposé entre le troisième groupe de lentilles (LG3) et le quatrième groupe de lentilles (LG4) et
   - pour conserver la netteté de l'image dans chaque position de grossissement quelconque pour une plage de grossissement > 12, le deuxième sous-ensemble (LG2) et le quatrième sous-ensemble (LG4) étant munis de moyens d'entraînement qui réalisent des vitesses de translation différentes,
   - le grossissement étant le plus faible lorsque l'écart entre les deux sous-ensembles mobiles (LG2, LG4) et le premier sous-ensemble (LG1) est le plus faible.

2. Stéréomicroscope muni d'un système de grossissement afocal selon la revendication 1, **caractérisé par** les conditions suivantes pour le grossissement $\Gamma$ :

$$- \ \Gamma_{min} \geq 0,31$$

$$- \ 3,5 \leq \Gamma_{max} \leq 5,5$$

3. Stéréomicroscope muni d'un système de grossissement afocal selon les revendications 1 et 2, exécuté pour une plage de grossissement >12 à 20 et pour une longueur hors tout de 130 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 55,83000 | | | | |
| | | 4,50000 | | 1,530190 | 76,58 |
| | -55,83000 | | | | |
| | | 2,30000 | | 1,584820 | 40,57 |
| | infini | | | | |
| | | | a1 | | |
| LG2 | -35,22750 | | | | |
| | | 1,40000 | | 1,747910 | 44,57 |
| | 9,17300 | | | | |
| | | 2,50000 | | 1,812659 | 25,16 |
| | 25,12050 | | | | |
| | | | a2 | | |
| LG3 | 30,06750 | | | | |

(suite)

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| | | 1,50000 | | 1,812659 | 25,16 |
| | 15,07000 | | | | |
| | | 1,80000 | | 1,489140 | 70,23 |
| | 18,96900 | | | | |
| | | 2,90000 | | 1,716160 | 53,61 |
| | -44,98960 | | | | |
| Diaphragme | | 1,00000 | | | |
| | infini | | | | |
| | | | a3 | | |
| LG4 | -47,65660 | | | | |
| | | 1,30000 | | 1,620680 | 49,54 |
| | 7,94400 | | | | |
| | | 2,90000 | | 1,624080 | 36,11 |
| | 41,86920 | | | | |
| | | | a4 | | |
| Espace infini vers la lentille du tube | | | | | |

| Grossissement Γ | 4,0x | 1,0x | 0,32x |
|---|---|---|---|
| a1 | 68,657 | 39,472 | 2,098 |
| a2 | 11,189 | 40,373 | 77,747 |
| a3 | 28,039 | 12,818 | 3,104 |
| a4 | 0,016 | 15,237 | 24,951 |

4. Stéréomicroscope muni d'un système de grossissement afocal selon les revendications 1 et 2, exécuté pour une plage de grossissement >12 à 20 et pour une longueur hors tout de 160 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 56,75149 | | | | |
| | | 1,80000 | | 1,584820 | 40,57 |
| | 34,34561 | | | | |
| | | 3,23632 | | 1,487940 | 84,07 |
| | 399,82663 | | | | |
| | | | a1 | | |
| LG2 | -42,51193 | | | | |
| | | 1,20000 | | 1,747910 | 44,44 |
| | 12,24683 | | | | |
| | | 2,43354 | | 1,812639 | 25,16 |
| | 35,41005 | | | | |
| | | | a2 | | |

(suite)

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG3 | 27,81809 | | | | |
| | | 1,50000 | | 1,616640 | 44,27 |
| | 11,53722 | | | | |
| | | 3,35345 | | 1,530190 | 76,58 |
| | -38,54358 | | | | |
| Diaphragme | | 2,00000 | | | |
| | infini | | | | |
| | | | a3 | | |
| LG4 | -35,44956 | | | | |
| | | 2,96303 | | 1,652220 | 33,60 |
| | -11,34526 | | | | |
| | | 1,30000 | | 1,620680 | 49,54 |
| | 86,38284 | | | | |
| | | | a4 | | |
| Espace infini vers la lentille du tube | | | | | |

| Grossissement Γ | 4,75x | 1,25x | 0,32x |
|---|---|---|---|
| a1 | 90,889 | 57,703 | 2,392 |
| a2 | 5,936 | 39,122 | 94,433 |
| a3 | 44,126 | 17,262 | 2,244 |
| a4 | 0,000 | 26,864 | 41,882 |

**5.** Stéréomicroscope muni d'un système de grossissement afocal selon les revendications 1 et 2, exécuté pour une plage de grossissement >12 à 20 et pour une longueur hors tout de 197 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 59,45081 | | | | |
| | | 1,80000 | | 1,584820 | 40,57 |
| | 36,56531 | | | | |
| | | 3,09611 | | 1,487940 | 84,07 |
| | 323,75358 | | | | |
| | | | a1 | | |
| LG2 | -47,70503 | | | | |
| | | 1,20000 | | 1,747910 | 44,44 |
| | 13,26264 | | | | |
| | | 2,44516 | | 1,812639 | 25,16 |
| | 37,95059 | | | | |
| | | | a2 | | |

(suite)

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG3 | 31,52821 | | | | |
| | | 1,50000 | | 1,616640 | 44,27 |
| | 13,05517 | | | | |
| | | 3,14976 | | 1,530190 | 76,58 |
| | -46,21433 | | | | |
| | | 2,00000 | | | |
| | infini | | | | |
| | | | a3 | | |
| LG4 | -46,50621 | | | | |
| | | 3,63255 | | 1,652220 | 33,60 |
| | -13,80465 | | | | |
| | | 1,30000 | | 1,620680 | 49,54 |
| | 82,22593 | | | | |
| | | | a4 | | |
| Espace infini vers la lentille du tube | | | | | |

| Grossissement Γ | 5,43x | 1,27x | 0,32x |
|---|---|---|---|
| a1 | 90,390 | 61,772 | 2,409 |
| a2 | 5,284 | 40,902 | 100,265 |
| a3 | 73,960 | 23,866 | 2,328 |
| a4 | 0,000 | 50,094 | 71,632 |

**6.** Stéréomicroscope muni d'un système de grossissement afocal selon la revendication 1, comprenant cinq sous-ensembles optiques, un cinquième sous-ensemble étant réalisé fixe avec une réfringence positive.

**7.** Stéréomicroscope muni d'un système de grossissement afocal selon l'une des revendications 8 à 9, **caractérisé par** les conditions suivantes :

-

$$\Gamma_{min} \geq 0{,}29$$

-

$$5 \leq \Gamma_{max} \leq 11$$

**8.** Stéréomicroscope muni d'un système de grossissement afocal selon les revendications 1, 6 et 7, exécuté pour une plage de grossissement >20 et pour une longueur hors tout de 130 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 55,83000 | | | | |
| | | 4,50000 | | 1,530190 | 76,58 |
| | -55,83000 | | | | |
| | | 2,30000 | | 1,584820 | 40,57 |
| | infini | | | | |
| | | | a1 | | |
| LG2 | -29,63900 | | | | |
| | | 1,40000 | | 1,747910 | 44,57 |
| | 9,57600 | | | | |
| | | 2,50000 | | 1,812659 | 25,16 |
| | 28,59370 | | | | |
| | | | a2 | | |
| LG3 | 17,66550 | | | | |
| | | 1,40000 | | 1,708240 | 39,12 |
| | 9,44240 | | | | |
| | | 3,15000 | | 1,530190 | 76,58 |
| | -30,94640 | | | | |
| Diaphragme | | 1,00000 | | | |
| | infini | | | | |
| | | | a3 | | |
| LG4 | -27,97950 | | | | |
| | | 2,10000 | | 1,812659 | 25,16 |
| | -10,59190 | | | | |
| | | 1,30000 | | 1,747910 | 44,57 |
| | 38,12900 | | | | |
| | | | a4 | | |
| LG5 | 54,24520 | | | | |
| | | 2,05000 | | 1,708240 | 39,12 |
| | 33,25480 | | | | |
| | | 2,28000 | | 1,489140 | 70,23 |
| | infini | | | | |
| Espace infini vers la lentille du tube | | | | | |

| Grossissement Γ | 6,00x | 2,00x | 0,30x |
|---|---|---|---|
| a1 | 69,713 | 51,441 | 2,608 |
| a2 | 2,034 | 20,306 | 69,139 |
| a3 | 32,226 | 20,448 | 4,346 |
| a4 | 2,047 | 13,824 | 29,927 |

**9.** Stéréomicroscope muni d'un système de grossissement afocal selon les revendications 1, 6 et 7, exécuté pour une plage de grossissement >20 et pour une longueur hors tout de 140 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 54,46484 | | | | |
| | | 4,50000 | | 1,530190 | 76,58 |
| | -54,53767 | | | | |
| | | 2,30000 | | 1,584820 | 40,57 |
| | 95114,5695 | | | | |
| | | | a1 | | |
| LG2 | -28,70630 | | | | |
| | | 1,40000 | | 1,747910 | 44,57 |
| | 8,84044 | | | | |
| | | 2,50000 | | 1,812659 | 25,16 |
| | 26,08074 | | | | |
| | | | a2 | | |
| LG3 | 17,64930 | | | | |
| | | 1,55000 | | 1,708240 | 39,12 |
| | 9,44423 | | | | |
| | | 3,00000 | | 1,530190 | 76,58 |
| | -33,13612 | | | | |
| Diaphragme | | 1,00000 | | | |
| | infini | | | | |
| | | | a3 | | |
| LG4 | -26,24859 | | | | |
| | | 2,10000 | | 1,812659 | 25,16 |
| | -10,15678 | | | | |
| | | 1,30000 | | 1,747910 | 44,57 |
| | 39,51109 | | | | |
| | | | a4 | | |
| LG5 | 73,94310 | | | | |
| | | 1,50000 | | 1,708240 | 39,12 |
| | 42,44389 | | | | |
| | | 2,00000 | | 1,489140 | 70,23 |
| | -320,3785 | | | | |
| Espace infini vers la lentille du tube | | | | | |

| Grossissement Γ | 7,50x | 3,08x | 0,30x |
|---|---|---|---|
| a1 | 69,688 | 56,394 | 3,216 |
| a2 | 2,138 | 15,432 | 68,609 |
| a3 | 43,154 | 31,715 | 7,118 |
| a4 | 1,920 | 13,358 | 37,955 |

**10.** Stéréomicroscope muni d'un système de grossissement afocal selon les revendications 1, 6 et 7, exécuté pour une plage de grossissement >12 à 20 et pour une longueur hors tout de 160 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 54,41669 | | | | |
| | | 4,50000 | | 1,530190 | 76,58 |
| | -53,24124 | | | | |
| | | 2,30000 | | 1,584820 | 40,57 |
| | -23179,171 | | | | |
| | | | a1 | | |
| LG2 | -29,65255 | | | | |
| | | 1,40000 | | 1,747910 | 44,57 |
| | 8,37016 | | | | |
| | | 2,50000 | | 1,812659 | 25,16 |
| | 23,91363 | | | | |
| | | | a2 | | |
| LG3 | 18,62642 | | | | |
| | | 1,55000 | | 1,708240 | 39,12 |
| | 9,95934 | | | | |
| | | 3,00000 | | 1,530190 | 76,58 |
| | -35,01484 | | | | |
| Diaphragme | | 1,00000 | | | |
| | infini | | | | |
| | | | a3 | | |
| LG4 | -28,91998 | | | | |
| | | 2,10000 | | 1,812659 | 25,16 |
| | -11,51291 | | | | |
| | | 1,30000 | | 1,747910 | 44,57 |
| | 46,94391 | | | | |
| | | | a4 | | |
| LG5 | 159,19894 | | | | |
| | | 1,50000 | | 1,708240 | 39,12 |
| | 81,58989 | | | | |
| | | 2,00000 | | 1,489140 | 70,99 |
| | -229,49361 | | | | |
| Espace infini vers la lentille du tube | | | | | |

| Grossissement Γ | 9,00x | 3,31x | 0,30x |
|---|---|---|---|
| a1 | 69,688 | 56,490 | 3,698 |
| a2 | 2,138 | 15,336 | 68,128 |
| a3 | 63,059 | 23,234 | 8,411 |
| a4 | 1,967 | 33,862 | 56,615 |

**11.** Stéréomicroscope muni d'un système de grossissement afocal selon les revendications 1, 6 et 7, exécuté pour une plage de grossissement >20 et pour une longueur hors tout de 180 mm avec les caractéristiques suivantes :

| Plan ou groupe de lentilles | Rayon r | Épaisseur d | Écarts a | Indice de réfraction $n_e$ | Coefficient d'Abbe $v_e$ |
|---|---|---|---|---|---|
| Espace infini vers l'objectif | | | | | |
| LG1 | 54,18919 | | | | |
| | | 4,50000 | | 1,530190 | 76,58 |
| | -52,34592 | | | | |
| | | 2,30000 | | 1,584820 | 40,57 |
| | -16391,102 | | | | |
| | | | a1 | | |
| LG2 | -29,79285 | | | | |
| | | 1,40000 | | 1,747910 | 44,57 |
| | 8,12478 | | | | |
| | | 2,50000 | | 1,812659 | 25,16 |
| | 22,97472 | | | | |
| | | | a2 | | |
| LG3 | 19,38349 | | | | |
| | | 1,55000 | | 1,708240 | 39,12 |
| | 10,35778 | | | | |
| | | 3,00000 | | 1,530190 | 76,58 |
| | -36,27659 | | | | |
| Diaphragme | | 1,00000 | | | |
| | infini | | | | |
| | | | a3 | | |
| LG4 | -29,29687 | | | | |
| | | 2,10000 | | 1,812659 | 25,16 |
| | -12,25144 | | | | |
| | | 1,30000 | | 1,747910 | 44,57 |
| | 56,73263 | | | | |
| | | | a4 | | |
| LG5 | 402,00502 | | | | |
| | | 1,50000 | | 1,708240 | 39,12 |
| | 147,33917 | | | | |
| | | 2,00000 | | 1,489140 | 70,99 |
| | -182,38036 | | | | |
| Espace infini vers la lentille du tube | | | | | |

| Grossissement Γ | 10,50x | 3,54x | 0,30x |
|---|---|---|---|
| a1 | 69,688 | 56,613 | 4,310 |
| a2 | 2,138 | 15,213 | 67,516 |
| a3 | 83,008 | 51,170 | 9,573 |
| a4 | 2,025 | 33,862 | 75,459 |

**12.** Stéréomicroscope muni d'un système de grossissement afocal selon l'une des revendications 1 à 11, **caractérisé en ce que** les sous-ensembles optiques mobiles sont couplés avec des dispositifs d'entraînement qui sont réalisés sous la forme de

- cames cylindriques
- pignon et crémaillère avec commande forcée par un disque à cames
- commande forcée par plusieurs disques à cames
- entraînement direct motorisé, de préférence avec un moteur pas à pas ou
- système de levage avec mouvement différentiel et commande forcée par un disque à cames.

LG1        LG2     LG3  B  LG4

a1

L1

L2

**Fig. 1**

Bewegungen

140
120
100
80
60
40
20
0

LG4

LG2

0   0,5   1   1,5   2   2,5   3   3,5   4   4,5

Vergrößerung

Vergrößerungsbereich: 12.5x 0.32-4.0      **Fig.2**

LG1    LG2    LG3  B  LG4

a1    a2    a3    a4

L1

L2

**Fig.3**

Bewegungen

180
160
140
120
100
80
60
40
20
0

LG4

LG2

0    0,5    1    1,5    2    2,5    3    3,5    4    4,5    5

Vergrößerung

Vergrößerungsbereich: 14.8x 0.32-4.75

**Fig.4**

EP 1 544 653 B1

LG1  LG2        LG3  B  LG4

a1    a2    a3    a4

L1

L2

Fig. 5

Bewegungen

250

200

LG4

150

100

LG2

50

0

0    1    2    3    4    5    6

Vergrößerung

Vergrößerungsbereich: 17.0x 0.32-5.43

Fig.6

LG1　　　　LG2　　LG3　B　LG4　　LG5

a1　　　a2　　a3　　a4

L1

L2

Fig. 7

Bewegungen

140
120
100
80
60
40
20
0

0　1　2　3　4　5　6　7

LG4

LG2

Vergrößerung

Vergrößerungsbereich: 20.0x 0.30-6.00

Fig.8

LG1　　　　　LG2　　　　　LG3　B　LG4　　　　LG5

a1　　　　　　a2　　　　a3　　　　a4

L1

L2

Fig. 9

Bewegungen

140
120
100
80
60
40
20
0

LG4

LG2

0　1　2　3　4　5　6　7　8　9

Vergrößerung

Vergrößerungsbereich: 25.0x 0.30-7.50

Fig.10

LG1    LG2                LG3  B LG4              LG5

a1        a2        a3        a4

L1

L2

Fig. 11

Bewegungen

160
140
120
100
80
60
40
20
0

LG4

LG2

0    1    2    3    4    5    6    7    8    9    10

Vergrößerung

Vergrößerungsbereich: 30.0x 0.30-9.00

Fig.12

Fig. 13

Vergrößerungsbereich: 35.0x 0.30-10.50

Fig.14

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20207780 U1
- US 6320702 B1
- US 6157495 A
- US 6335833 B1
- US 20030210470 A
- DE 3904190 A1
- US 4802717 A